**Europäisches Patentamt**

**European Patent Office**

**Office européen des brevets**

(19)

(11) Veröffentlichungsnummer: **0 069 325**
**B1**

(12)

# EUROPÄISCHE PATENTSCHRIFT

(45) Veröffentlichungstag der Patentschrift:
**08.04.87**

(21) Anmeldenummer: **82105742.9**

(22) Anmeldetag: **29.06.82**

(51) Int. Cl.⁴: **H 04 N 7/01**

(54) **Verfahren zur Wandlung der Zeilenzahl.**

(30) Priorität: **06.07.81 DE 3126635**

(43) Veröffentlichungstag der Anmeldung:
**12.01.83 Patentblatt 83/2**

(45) Bekanntmachung des Hinweises auf die Patenterteilung:
**08.04.87 Patentblatt 87/15**

(84) Benannte Vertragsstaaten:
**DE FR GB**

(56) Entgegenhaltungen:
**FR-A-2 501 944**
**US-A-4 125 862**

(73) Patentinhaber: **ROBERT BOSCH GMBH, Postfach 50, D-7000 Stuttgart 1 (DE)**

(72) Erfinder: **Heitmann, Jürgen, Dipl.- Ing., Ernst- Pasque- Strasse 36, D-6146 Alsbach- Hähnlein 1 (DE)**

(74) Vertreter: **Gornott, Dietmar, Dipl.- Ing., c/o Robert- Bosch GmbH Postfach 429 Robert- Bosch- Strasse 7, D-6100 Darmstadt (DE)**

## Beschreibung

### Stand der Technik

Die Erfindung betrifft ein Verfahren zur Wandlung der Zeilenzahl eines digitalisierten Fernsehsignals gemäß der Gattung des Hauptanspruchs.

Aus der US-PS 4,125,862 ist bereits ein solches Verfahren bekannt, bei dem jedoch nur ausgewählte Teile eines aufgenommenen Fernsehbildes in derartiger Weise verarbeitet werden.

Es ist ferner ein Verfahren zur Wandlung eines digitalisierten Fernsehsignals mit einer ersten Zeilennorm in ein Fernsehsignal mit einer zweiten Zeilennorm bekannt (US-PS 4,051,531), wobei die zweite Zeilennorm mehr oder weniger Zeilen aufweisen kann als die erste. Hierbei wird ein digitales Querfilter mit einer Kette von in Kaskadenschaltung angeordneten, einzeiligen Verzögerungsgliedern benutzt. Zwischen den Verzögerungsgliedern ist je ein Abgriff vorgesehen, an welchem je eine Multiplizierschaltung angeschlossen ist, deren Ausgänge gemeinsam mit einer Addierstufe verbunden sind. Am jeweils anderen Eingang der Multiplizierschaltung liegen gewichtende Koeffizienten, so daß eine Interpolation der eingegebenen Information möglich ist. Der Ausgang der Addierstufe ist an eine Speicherschaltung angeschlossen, in welcher diese interpolierte Information mit einer dazwischenliegenden Zeilennorm gespeichert wird. Am Ausgang der Speicherschaltung sind Fernsehsignale der zweiten Zeilennorm durch Auslesen nur der gewünschten Zeilen aus der Zwischennorm abnehmbar. Das bekannte Verfahren ist durch diese umfangreiche Schaltung vor allem bei extremen Änderungen der Zeilenzahl, wie sie bei Bildformatänderungen notwendig werden, sehr aufwendig und teuer.

Der Erfindung liegt daher die Aufgabe zugrunde, ein vereinfachtes Verfahren zur Wandlung der Zeilenzahl anzugeben.

### Vorteile der Erfindung

Das erfindungsgemäße Verfahren mit den kennzeichnenden Merkmalen des Hauptanspruchs hat demgegenüber den Vorteil, daß durch die zweimalige Koordinatendrehung wesentlich weniger und kostengünstigere Bauelemente einsetzbar sind.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist, daß bei Verwendung digitaler Filter die sonst notwendigen Zeilenverzögerungsglieder durch preisgünstigere Bildpunktverzögerungsglieder ersetzt werden können.

## Zeichnung

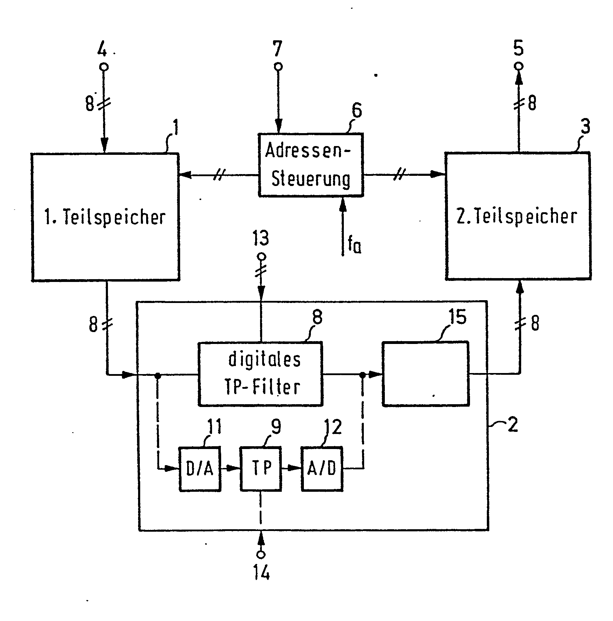

Ein Ausführungsbeispiel zur Durchführung des erfindungsgemäßen Verfahrens ist in der Zeichnung dargestellt und in der nachfolgenden Beschreibung näher erläutert.

Die Schaltung zur Wandlung der Zeilenzahl eines digitalisierten Fernsehsignals umfaßt im wesentlichen einen ersten Teilbildspeicher 1, eine Filteranordnung 2 und einen zweiten Teilbildspeicher 3.

Die einzelnen Speicherplätze werden - wie bei RAM's üblich - durch Angabe einer Reihen- und einer Spaltenadresse angewählt. Das an Klemme 4 anliegende digitalisierte Fernsehsignal (z.B. 8 Bit) wird dem ersten Teilbildspeicher 1 zugeführt und in einer ersten Richtung, beispielsweise horizontal, in den ersten Teilbildspeicher 1 eingeschrieben. Nach dem vollständigen Einschreiben eines ersten Teilbildes wird das Signal dieses Teilbildes in einer zur Einschreibrichtung senkrechten zweiten Richtung, also beispielsweise vertikal, ausgelesen. Während des Auslesevorganges wird gleichzeitig das digitalisierte Fernsehsignal eines folgenden, zweiten Teilbildes in die nun freigewordenen Speicherplätze des ersten Teilbildspeichers 1 in der gleichen zweiten Richtung eingeschrieben, so daß sowohl die Einschreibrichtung als auch die Ausleserichtung jedes Teilbildes jeweils abwechselnd horizontal und vertikal verlaufen; denn das Auslesen des zweiten Teilbildes erfolgt nun wieder in der ersten Richtung, also beispielsweise horizontal, usw.

Das Signal des ersten Teilbildes wird nach dem Auslesen vom ersten Teilbildspeicher 1 über die Filteranordnung 2, mit welcher die Wandlung der Zeilenzahl gesteuert werden kann, dem zweiten Teilbildspeicher 3 zugeführt. In diesem wird das Signal nun in der zweiten Richtung, also beispielsweise vertikal, vollständig eingeschrieben und danach in der ersten Richtung, also beispielsweise horizontal, ausgelesen. Während des Auslesevorganges des zweiten Teilbildspeichers 3 erfolgt gleichzeitig - wie schon beim ersten Teilbildspeicher 1 beschrieben das Einschreiben des nächsten Teilbildes in der gleichen Richtung, also beispielsweise horizontal, in die freigewordenen Speicherplätze. Das Auslesen dieses Teilbildes erfolgt dann wieder in der dazu senkrechten zweiten Richtung, also beispielsweise vertikal. An der Klemme 5 ist dann ein digitalisierten Fernsehsignal mit der gewandelten Zeilenzahl abnehmbar.

Die Adressen für die beiden Teilbildspeicher 1 und 3 werden in einer Steuerschaltung 6 aus dem Abtastsignal $f_a$ und den an Klemme 7 anliegenden Fernsehsynchronsignalen in bekannter Weise abgeleitet.

Die Filteranordnung 2 kann ein digitales Filter 8 oder ein analoges Filter 9 (Tiefpaß) mit vorgeschaltetem D/A-Wandler 11 und nachgeschaltetem A/D-Wandler 12 enthalten. Die Filteranordnung 2 kann dabei entweder eine festeingestellte Tiefpaßcharakteristik aufweisen (z.B. für Normwandlungszwecke) oder eine veränderbare (z.B. für Zoomeffekte). Eine veränderbare Charakteristik des digitalen Filters 8 erreicht man bekanntlich durch Steuerung mit Hilfe von veräderbaren Koeffizienten, welche an Klemme 13 anliegen. Im Falle des analogen Tiefpaßfilters 9 ist eine Veränderung der Grenzfrequenz durch ein an Klemme 14 anliegendes Signal möglich. Durch die Tiefpaßcharakteristik der Filteranordnung 2 wird eine Integration oder eine Interpolation verschiedener Abtastwerte (Bildzeilen) bewirkt, weshalb die Zahl der Abtastwerte (Bildzeilen) entweder herabgesetzt oder erhöht werden kann. Da sich damit die Abtastfrequenz ändert, ist es notwendig, einen Abtastratenwandler 15 nachzuschalten, womit die ursprüngliche Abtastfrequenz wieder hergestellt werden kann. Dieser Abtastratenwandler 15 kann in bekannter Weise durch einen Pufferspeicher, z. B. ein FIFO (First in First out Memory), realisiert sein. Die Abtastrate des Eingangssignals für den Pufferspeicher entspricht der verdoppelten Tiefpaß-Grenzfrequenz. Wird diese Grenzfrequenz verringert, so stellt der Pufferspeicher durch Zeitkompression des Signales die ursprüngliche Abtastfrequenz des Bildsignales wieder her. Die bei der Zeitkompression entstehenden Signallücken können mit einem Signal aufgefüllt werden, das dem "Bildschwarz" entspricht.

Mit dem erfindungsgemäßen Verfahren kann gleichzeitig auch eine Veränderung des Fernsehbildes in horizontaler Richtung erfolgen, wenn eine weitere Filteranordnung 2 dem ersten Teilbildspeicher 1 vorgeschaltet oder dem zweiten Teilbildspeicher 3 nachgeschaltet wird.

## Patentansprüche

1. Verfahren zur Wandlung der Zeilenzahl eines digitalisierten Fernsehsignals, bei welchem das digitalisierte Fernsehsignal in einer ersten Richtung in einen Speicher eingeschrieben und in einer dazu senkrechten zweiten Richtung ausgelesen wird, dadurch gekennzeichnet, daß das digitalisierte Fernsehsignal eines ersten Teilbildes in einen ersten Speicher (1) in der ersten Richtung vollständig eingeschrieben wird, daß zu Beginn eines zweiten Teilbildes das gespeicherte Signal des ersten Teilbildes in der zur ersten Richtung senkrechten zweiten Richtung ausgelesen wird, daß in die beim Auslesen des Fernsehsignals aus dem ersten Speicher (1) freiwerdenden Speicherplätze das digitalisierte Fernsehsignal des nächsten Teilbildes in der der Ausleserichtung entsprechenden Richtung eingeschrieben wird, daß das ausgelesene Signal über eine Filteranordnung (2) mit Tiefpaßcharakteristik geleitet wird, daß das gefilterte Signal in einen zweiten Speicher (3) in der zweiten Richtung eingeschrieben wird, und daß das gespeicherte Signal aus dem zweiten Speicher in der ersten Richtung ausgelesen wird.

2. Verfahren nach Anspruch 1, dadurch gekennzeichnet, daß die Filteranordnung (2) aus einem digitalen Tiefpaßfilter (8) und einem nachgeschalteten Abtastratenwandler (15) besteht, daß die Frequenzcharakteristik des digitalen Filters (8) mittels veränderbarer Koeffizienten einstellbar ist, daß durch das digitale Filter (8) enrsprechend der veränderten Frequenzcharakteristik die Abtastfrequenz des Ausgangssignales geändert wird und daß die geänderte Abtastfrequenz durch den Abtastratenwandler (15) wieder auf den ursprünglichen Wert umgesetzt wird.

3. Verfahren nach Anspruch 1, dadurch gekennzeichnet, daß die Filteranordnung (2) aus einem analogen Tiefpaßfilter (9) und einem Abtastratenwandler (15) besteht, daß die Grenzfrequenz des analogen Tiefpasses (9) einstellbar ist, daß dem analogen Tiefpaß ein D/A-Wandler (11) vor- und ein A/D-Wandler (12) nachgeschaltet ist, daß die Abtastfrequenz des A/D-Wandlers (12) entsprechend der Grenzfrequenz des analogen Tiefpaßfilters (9) gegenüber der Abtastfrequenz des D/A-Wandlers (11) geändert ist und daß dem A/D-Wandler (12) der Abtastratenwandler (15) nachgeschaltet ist, der die geänderte Abtastfrequenz wieder auf den ursprünglichen Wert umsetzt.

4. Verfahren nach Anspruch 1, dadurch gekennzeichnet, daß beide Speicher (1, 3) mit der gleichen Abtastfrequenz ($f_a$) getaktet werden.

## Claims

1. Method for converting the number of lines of digitized television signal, in which the digitized television signal in a first direction is written into a memory and is read out in a second direction at right angles thereto, characterized in that the digitized television signal of a first field is completely written into a first memory (1) in the first direction and at the start of a second field the stored signal of the first field is read out in the second direction at right angles to the first direction, that into the storage locations which become free on reading the television signal out of the first memory (1) is written the digitized television signal of the next field in the direction corresponding to the readout direction, that the readout signal is passed across a filter arrangement (2) with low pass characteristic, that the filtered signal is written into a second memory (3) in the second direction and that the stored signal is read out of the second memory in the first direction.

2. Method according to claim 1, characterized in that the filter arrangement (2) comprises a digital low-pass filter (8) and a downstream- connected scanning rate converter (15), that the frequency characteristic of the digital filter (8) is adjustable by means of variable coefficients, that the scanning frequency of the output signals is modified by digital filter (8) corresponding to the varied frequency characteristic and that scanning rate converter (15) converts the modified scanning frequency back to the original value.

3. Method according to claim 1, characterized in that filter arrangement (2) comprises an analog low-pass filter (9) and a scanning rate converter (15), that the cut-off frequency of analog low-pass filter (9) is adjustable, that a D/A converter (11) is connected upstream and an A/D converter (12) downstream of the low-pass filter, that the scanning frequency of the A/D converter (12) is modified compared with the scanning frequency of D/A converter (11) in accordance with the cut-off frequency of the analog low-pass filter (9) and that the scanning rate converter (15), which convrrts the modified scanning frequency back to the original value, is connected downstream of the A/D converter (12).

4. Method according to claim 1, characterized in that both memories (1, 3) are timed with the same scanning frequency ($f_a$).

## Revendications

1. Procédé de conversion du nombre de lignes d'un signal de télévision numérisé dans lequel on enregistre dans une mémoire le signal de télévision numérisé dans une première direction et on le lit dans une seconde direction perpendiculaire à celle-ci, caractérisé en ce que l'on enregistre entièrement dans une première mémoire (1), dans la première direction, le signal de télévision numérisé d'une première demi-image; en ce qu'au début d'une seconde demi-image, on lit, dans la seconde direction perpendiculaire à la première direction, le signal mémorisé de la première demi-image; en ce que, dans les positions de mémoire devenues libres lors de la lecture du signal de télévision dans la première mémoire (1), on enregistre, dans la direction correspondant à la direction de lecture, le signal de télévision numérisé de la demi-image suivante; en ce que l'on fait passer le signal lu dans un dispositif de filtrage (2) à caractéristique passe-bas; en ce que l'on enregistre le signal filtré dans une seconde mémoire (3), dans la seconde direction; et en ce qu'on lit le signal mémorisé, de la seconde mémoire, dans la première direction.

2. Procédé selon la revendication 1, caractérisé en ce que le dispositif de filtrage est constitué d'un filtre numérique passe-bas (8) et d'un convertisseur de fréquence de balayage (15) monté en aval; en ce que l'on peut régler la caractéristique de fréquence du filtre numérique (8) au moyen de coefficients modifiables; en ce que la fréquence de balayage du signal de sortie est modifiée par le filtre numérique (8) en fonction de la caractéristique de fréquence modifiée; et en ce que la fréquence de balayage modifiée est à nouveau convertie en la valeur d'origine par le convertisseur de fréquence de balayage (15).

3. Procédé selon la revendication 1, caractérisé en ce que le dispositif de filtrage (2) est constitué d'un filtre analogique passe-bas (9) et d'un convertisseur de fréquence de balayage (15); en ce que l'on peut régler la fréquence limite du filtre analogique passe-bas (9); en ce qu'un convertisseur numérique/ analogique (11) est monté en amont du filtre analogique passe-bas et un convertisseur analogique/numérique (12), en aval de ce filtre; en ce que la fréquence de balayage du convertisseur analogique/numérique (12) est modifiée en fonction de la fréquence limite du filtre analogique passe-bas (9) par rapport à la fréquence de balayage du convertisseur numérique/analogique (11); et en ce qu'en aval du convertisseur analogique/numérique (12) est monté le convertisseur de fréquence de balayage (15) qui convertit, à nouveau en la valeur d'origine, la fréquence de balayage modifiée.

4. Procédé selon la revendication 1, caractérisé en ce que les deux mémoires (1, 3) fonctionnent à la même fréquence de balayage ($f_a$).